**Europäisches Patentamt**

(19) **European Patent Office**

**Office européen des brevets**

(11) Publication number: **0 243 731**

**A1**

(12) # EUROPEAN PATENT APPLICATION

(21) Application number: **87104984.7**

(22) Date of filing: **03.04.87**

(51) Int. Cl.³: **B 65 G 17/06**

(30) Priority: **29.04.86 US 856999**

(43) Date of publication of application:
**04.11.87 Bulletin 87/45**

(84) Designated Contracting States:
**DE GB**

(71) Applicant: **CONSOLIDATION COAL COMPANY**

**Pittsburgh Pennsylvania(US)**

(72) Inventor: **Doerr, Richard E.**
**Rt. 2 Box 29EE**
**Morgantown W. Virginia(US)**

(72) Inventor: **Riester, John B.**
**Rt. 8 Box 4**
**Morgantown W. Virginia(US)**

(72) Inventor: **McCormick, Thomas W.**
**1488 Western Avenue**
**Morgantown W. Virginia(US)**

(74) Representative: **Patentanwälte Grünecker, Kinkeldey, Stockmair & Partner**
**Maximilianstrasse 58**
**D-8000 München 22(DE)**

(54) **Wear resistant chain and guide for a tramming conveyor.**

(57) Apparatus for the protection of a conveyor chain (13) made from a plurality of interconnected links, from excessive wear from abrasive particles. The apparatus is constructed using a base plate (10) for supporting the protection apparatus with first and second parallelly spaced side plates (11,12) attached normal to the base plate (10) and spaced by a distance greater than the width of the conveyor chain (13). Wear plates (22,23) are attached to the upper surface of the side plates and spaced to form a central slot (35) between the wear plates. A cover plate (25) is positioned over the wear plates having a length dimensioned to extend over the wear plates and a width at least equal to the length of an inner connecting link (20,21). An extension (36) is formed on the underside of the cover plate (25) having a depth greater than the thickness of the wear plates. The chain is then fastened to the extension (36) so that the links are positioned above the base plate and away from the side plates.

EP 0 243 731 A1

./...

FIG. 1

WEAR RESISTANT CHAIN AND GUIDE FOR A TRAMMING CONVEYOR

BRIEF DESCRIPTION OF THE PRIOR ART

Several patents have provided disclosures to reduce wear on a conveyor chain. United States patent issued to Francis J. Garvey, 3,944,059, illustrates one form of chain protected conveyor. The patent to Garvey, however, illustrates an extremely complex system for protecting the chain from wear. The United States patent issued to Creighton J. Besch, 4,358,010, attempts to reduce wear on the moving components of the conveyor by enclosing the conveyor in plastic elements. The United States patent to Victor D. Petershack, 4,114,467, illustrates a method for contending with wear by having snap on wear pads which basically comprise a resilient generally cylindrical body portion of a length adapted to fit between the opposite side bars of a conveyor chain.

Other methods for protecting the chain from wear include such things as lubricators and dust guards. Such patents are illustrated by the patent to W. A. Williams, 2,909,937.

BRIEF DESCRIPTION OF THE INVENTION

All of the above referenced patents failed to provide for adequate protection of a chain from wear when the chain and conveyor mechanism is subjected to severe pressure and abrasive wear. In order to isolate the chain from substantially all of the wear due to pressure and abrasive particles, an apparatus is provided which essentially isolates the chain in an enclosure and further, isolates the chain from rubbing or touching any portion of the enclosure. Since the chain is isolated from particles entering the chain region, the particles will not be carried lock toward the input end of the conveyer causing an accumulation of fines on the mine floor around the discharge end of the conveyor and under the conveyor return. Such an apparatus is constructed from a base plate used for supporting the protection apparatus. First and second side plates are attached normal to the base plate and are spaced sufficiently so that the chain will not touch either of the first and second side plates. Wear plates are attached on top of the side plates and are space to form a central slot along the length of the space between the first and second parallelly spaced side plates. A cover means is provided over the slots and wear plates, having a length dimensioned to exceed the width of the wear plates and having a width at least as wide as one of the inner connecting linkages of the chain. An extension is formed on the underside of the cover plate which passes through the slot and has a dimensioned exceeding the width of the wear plate. The cover plate is then rigidly attached to the chain so that when the chain is moved along the space between the first and second parallelly spaced side plates. The chain is prevented from moving side to side or dropping to the bottom by the rigid attachment of the chain to the cover plates. The slot prevents side to side movement of the chain so that it can not impact or rub against the side plates or the base plate surface. The wear plates may be made of a harden steel which can provide adequate wear surface or the wear plates can be made of an urethane type plastic. It is also obvious that the wear plates can be made of steel covered with an urethane type plastic.


BRIEF DESCRIPTION OF THE FIGURES

FIGURE 1 is an isometric view of the conveyor chain illustrating the linkage, the base and the apparatus surrounding the chain to protect the chain from wear;

FIGURE 2 is cross-sectional view of the drawing illustrated in FIGURE 1 taken through the lines 2-2;

FIGURE 3 is a side view of the conveyor illustrating the chain movement along the top of the conveyor and the bottom of the conveyor.

DETAILED DESCRIPTION OF THE INVENTION

Throughout the specification like numbers will be used for like parts.

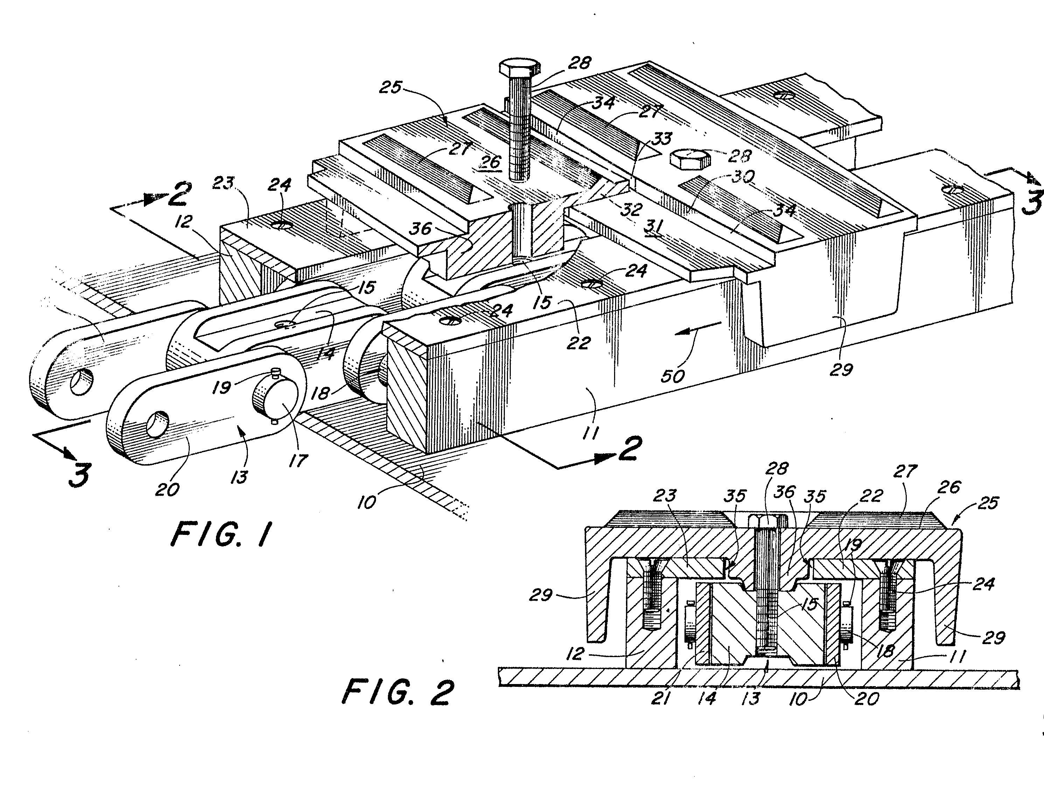

Referring to all of the drawings but in particular to FIGURE 1 a base plate 10 has a first side plate 11 and a second side plate 12 attached in any usual manner normal to the surface of base plate 10, such attachment can be by means of bolts, welding or any other usual means. The spacing of first side plate 11 and second side plate 12 is dimensioned to accommodate the maximum width of a chain 13. Chain 13 basically has an interconnecting solid portion 14 with a bolt hole 15 therein. Chain links 20 and 21 are attached to portion 14 by means of pins 17 and 18. Pins 17 and 18 are both retained by vertical tapered holding pins 19. Connecting links 20 and 21 connect to the next succeeding center portion and links for continuation of the chain. Wear strips 22 and 23 are attached to first and second side plates 11 and 12, respectively, by any usual means such as bolts 24. Bolts 24 pass through wear strips 22 and 23 and into side plates 11 or 12. Bolts 24 are likewise recessed by an amount sufficient so that the heads of bolt 24 do not wear against the cover plates passing down the conveyor.

Such cover plates are illustrated by arrow 25 and comprise an upper surface 26 which has attached thereto a plurality of cleats 27. Cover plate 25 is securely attached to center portion 14 using a bolt 28 threaded into hole 15 of center portion 14. A shroud plate 29 may be attached to cover 25 in order to further provide isolation of materials entering the region containing the chain and wear plate 23. Each of the cover plates has a step 30 and an extended portion 31, along with a mating extension 32. A space 33 is provided between each of the succeeding cover plates to provide for variations in length of chain 13 along with a tapered edge 34 on each adjoining cover plate to provide for horizontal rotation of the conveyor system.

With reference to FIGURE 2, cover plates 25 are position to provide a slot 35 having a width to accommodate an extension 36 which is attached to or formed as a part of cover plate 25. Extension 36 has a width less than the width of slot 35. Bolt 28 is illustrated as passing through cover plate 25, through extension 36 and into center portion 14, pulling center portion 14 tightly against extension 36. All of chain 13 clears base plate 10 so that chain 13 will not rub against base plate 10 during the movement of the chain along slot 35. Furthermore, the extension 36 prohibits the chain from moving from side to side by an amount sufficient to cause pins 18 or any other portion of chain 13 from striking side plates 11 or 12. Furthermore, the top of chain 13 is positioned below the undersurface of wear plates 23 so that the top of chain 13 is not worn during its movement along the conveyor.

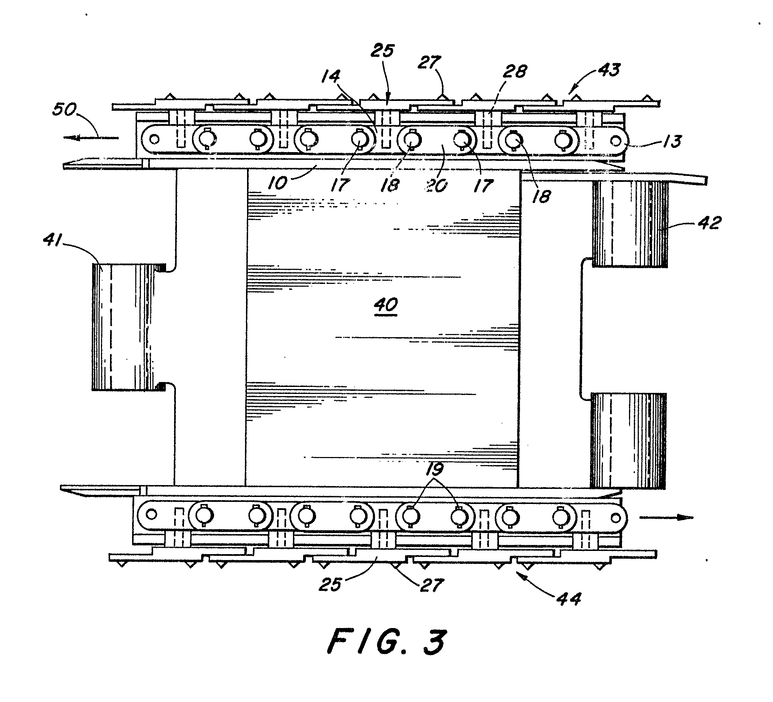

Referring to FIGURE 3, a cross-section of the entire conveyor is illustrated. The top portion of which is taken generally along lines 3-3 of FIGURE 1. the conveyor generally comprises a center casting 40 having a hinge portion 41 at one end and a mating hinge portion 42 at the other end. Hinge portions 41 and 42 are designed to accommodate additional sections of the swivel conveyor. FIGURE 3 illustrates only a single portion or section of the conveyor. The conveyor when assembled with a number of units, as illustrated in FIGURE 3, can be of any length, but is normally a length of five to seven hundred feet and will comprise several hundred units. The top portion referred to by arrow 43 is used primarily for the transportation of coal or other material on its surface. The bottom portion generally referred to by arrow 44 is the return portion of the conveyor. In the type conveyor described the return portion will either be elevated from the ground by an amount sufficient to provide clearance between cover plates 25 and the ground or when the conveyor is in the tramming mode, the jacks (not illustrated) will be raised and cover plates 25 will engage the ground with cleats 27 digging into the ground. Under these conditions, the conveyor will then be moved in either direction to provide mobility to the conveyor so that it can be transported or moved to a new location either for moving further into the mine seam as the mining progresses or returning from the mine seam so that the conveyor system can be rearranged for additional mining. Such a procedure is already described in a patent application entitled "Mine Haulage Method and Apparatus", by Richard E. Doerr, Margaret A. Roberts and Henry J. Brown, Application Number 882,100, and filed January 24, 1986.


OPERATION

Referring to all of the FIGURES the apparatus described operates as follows: chain 13 is secured between side plates 11 and 12, base plate 10 and wear plates 23 in a manner so that the chain will not touch any of the aforementioned surfaces. It is accomplished by cover plate 25 having an extension 36 which passes down into slot 35 so that the chain is guided within the volume formed by base plate 10, side plates 11 and 12 and wear plates 23. In normal use material is deposited on top of wear plates 23 with cleats 27 causing the material to be conveyed in the direction of the movement of conveyor chain 13. If, for example, conveyor chain 13 is moving in the direction of arrow 50, then cleats 34 will gather material between the cleats and move the material along the conveyor in the

-8-

direction of arrow 50. Cover plate 25 will also accommodate a horizontal rotation of chain 13 by taper 34 between the edges of the cover plates. Thus, the cover plates can accommodate several degrees of turn without the cover plates striking each other along their edges. Extensions 31 and 32 provide sufficient cover for the chain so that any movement longitudinally of the chain will prohibit substantially of the material being carried by the cover plates from entering into the chain region. Any material that does enter between wear plate 23 and the underside of cover 25 will be crushed by the movement of the wear plates against the cover, but it will not cause wear of the chain itself, since the chain is not in friction contact with any of the enclosing members, such as base plate 10, side plates 11 and 12 or wear plate 23. Any material that would fall into the volume surrounded by these elements will simply move along the volume and not cause wear of the chain itself. Wear plate 23 is preferably made of an extremely hard steel so that it will last a long period of time. It is obvious that wear on any of cover plates 25 can be easily accommodated by simply removing bolt 28 and lifting the cover plate off of the chain and replacing it with a new one. Thus, the maintenance of the conveyor is going to be extremely low. The shroud portion 29 prohibits material from dropping and working around side plates 11 or 12 and into the chain region.

Referring to FIGURE 3, it can be illustrated that when the apparatus is in the conveyor mode the chain is held up from contact with the ground. Thus, chain portion 44, as previously described, does not contact the ground while chain portion 43 is conveying material toward the output end of the conveyor. When the conveyor is in the tram mode then the conveyor is lowered until chain portion 44 is in contact with the ground. Movement of chain 13 will then cause the cover plates and cleats 27 to move the conveyor in the direction desired by the operator until the conveyor has either extended further into the region being mined to accommodate the mining machine or has moved away from the mining region to accommodate the movement of the conveyor to a new region to be mined.

WHAT WE CLAIM IS:

0243731

-1e-

CLAIM 1:     Apparatus for the protection of a conveyor chain comprising a plurality of interconnected links from excessive wear by abrasive particles comprising:

(a)     a base plate for supporting said protection apparatus and said conveyor chain;

(b)     First and second parallelly spaced side plates attached normal to said base plate and spaced by a dimension greater than the width of said conveyor chain;

(c)     Wear plate means attached to each of said first and second side plates, said wear plate means spaced to form a central slot between said first and second wear plate means;

(d)     Cover plate means comprising a plurality of adjoining cover plates each having a length dimensioned to extend over said wear plate means and a width at least equal to the length of one of said interconnecting links;

(e)     Extension means formed on the side of said cover plate means contacting said wear plate means, said extension means dimensioned to extend into said central slot by an amount greater than the thickness of said wear plate means; and,

(f)     means for securing said interconnected links to each of said cover plate means.

whereby said interconnected links are positioned above said base plate and away from said side plates and spaced away from said first and second wear plate means thereby substantially reducing any wear to said conveyor chain.

CLAIM 2: Apparatus as described in CLAIM 1 wherein each of said adjoining cover plates have mating overlapping extensions along their length, each of said cover plates adapted to prevent material being carried by said cover plates from dropping into said slot.

CLAIM 3: Apparatus as described in CLAIM 1 wherein each of said cover plates has a shroud plate extending from said cover plate width over said first and second side plates to reduce the quantity of material being carried by said cover plates from entering said slot.

CLAIM 4: Apparatus as described in CLAIM 2 wherein each of said cover plates has a shroud plate extending from said cover plate width over said first and second side plates to reduce the quantity of material being carried by said cover plates from entering said slot.

Pat6:28V

FIG. 1

FIG. 2

**FIG. 3**

))) European Patent Office

**EUROPEAN SEARCH REPORT**

Application number

| | **DOCUMENTS CONSIDERED TO BE RELEVANT** | | EP 87104984.7 |
|---|---|---|---|

| Category | Citation of document with indication, where appropriate, of relevant passages | Relevant to claim | CLASSIFICATION OF THE APPLICATION (Int Cl 4) |
|---|---|---|---|
| X | US - A - 3 669 247 (PULVER)  * Fig. 3,4 * | 1,2 | B 65 G 17/06 |
| Y | US - A - 4 274 536 (RIEGLER)  * Fig. 1,2,5 * | 1-4 | |
| Y | US - A - 3 877 567 (SOMMERFIELD)  * Fig. 3 * | 1-4 | |
| D,A | US - A - 4 358 010 (BESCH)  * Fig. 2,4 * | 1 | |

TECHNICAL FIELDS
SEARCHED (Int Cl 4)

B 65 G

The present search report has been drawn up for all claims

| Place of search | Date of completion of the search | Examiner |
|---|---|---|
| VIENNA | 22-05-1987 | BAUMGARTNER |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO Form 1503 03 82